# EUROPEAN PATENT APPLICATION

(11) **EP 4 778 662 A1**
(43) Date of publication of application: **22.07.2026**
(21) Application number: 25152560.6
(22) Date of filing: 17.01.2025
(51) Int. Cl.: B23K 9/095, B23K 9/173, B29C 65/12

(54) **A CONTROLLER, WELDING CONTROL SYSTEM AND WELDING SYSTEM**

(71) Applicant: Uniwelco ApS, 8260 Viby J (DK)
(72) Inventor: JAKOBSEN, Lars, 8000 Aarhus C (DK)
(74) Representative: Potter Clarkson

(57) **Abstract**

The present disclosure provides a controller for a welding system, wherein the welding system comprises a welder and associated welding parameter sensor, wherein the welder comprises a heat generation element configured to generate heat at a weld location on a workpiece suitable for forming a weld and a feed device configured to supply a consumable material to the weld location based on a received control signal, wherein the controller is configured to: receive a sensed parameter from the welding parameter sensor indicative of a characteristic of an interaction between the consumable material and one of: the workpiece; and the heat generation element; and generate and output the control signal configured to control the supply of the consumable material by the feed device based on the sensed parameter. There is also provided a corresponding welding control system, welding system, method and computer program product.

## Description

### Field

The present disclosure relates to a controller which is configured to generate and output a control signal for use by a feed device to control the rate of supply of a consumable material to a weld location during welding. The present disclosure is further directed towards: a welding control system comprising the controller and a welding parameter sensor; a welding system comprising the welding control system and a welder; a method for controlling a welding system and a computer readable medium comprising computer program code.

### Background

Welding is a critical process in manufacturing and construction, providing a means to create strong, permanent joints between materials. The primary purpose of welding is to fuse two or more workpieces together to form a single, unified structure. This is accomplished by applying heat, pressure, or a combination of both, to melt the base materials and, in some cases, adding a consumable filler material to form a molten pool that solidifies into a strong joint.

### Summary

According to a first aspect of the present disclosure, there is provided a controller for a welding system, wherein the welding system comprises a welder and associated welding parameter sensor, wherein the welder comprises a heat generation element configured to generate heat at a weld location on a workpiece suitable for forming a weld and a feed device configured to supply a consumable material to the weld location based on a received control signal, wherein the controller is configured to:
receive a sensed parameter from the welding parameter sensor indicative of a characteristic of an interaction between the consumable material and one of: the workpiece; and the heat generation element; and
generate and output the control signal configured to control the supply of the consumable material by the feed device based on the sensed parameter.

In one or more embodiments, the heat generation element of the welder may be an electrode configured to generate an electric arc which generates the heat at the weld location; the received sensed parameter may be indicative of the presence or absence of a short-circuit of the electric arc caused by the introduction of the consumable material at the weld location; and wherein the control signal may be based on the presence or absence of the sensed short-circuit.

In one or more embodiments, the control signal may be configured to cause the feed device to one of slow and reverse the supply of the consumable material to the weld location based on the received sensed parameter being indicative that a short-circuit has been detected.

In one or more embodiments, the control signal may be configured to cause the feed device to one of increase and maintain the supply of the consumable material to the weld location based on the received sensed parameter being indicative that a short-circuit has not been detected.

In one or more embodiments, the received sensed parameter may be indicative of a sound at the weld location and wherein the controller is configured to generate the control signal based on the detected sound at the weld location.

In one or more embodiments, the controller may be configured to detect a sound of the consumable material touching the weld location in the received sensed parameter and wherein: when the received sensed parameter is indicative that the consumable material is touching the weld location, the controller is configured to generate a control signal that causes the feed device to reduce the supply of the consumable material; and when the received sensed parameter is indicative that the consumable material is not touching the weld location, the controller is configured to generate a control signal that causes the feed device to increase the supply of the consumable material.

In one or more embodiments, the heat generation element of the welder may be a hot air source configured to generate the heat at the weld location and wherein the workpiece comprises a thermoplastic, wherein:
the received sensed parameter is indicative of a tension on the consumable material, wherein tension on the consumable material is increased by the introduction of the consumable material at the weld location; and
the control signal is based on the sensed tension.

In one or more embodiments, when the received sensed parameter is indicative of a tension above a first threshold value, the controller may be configured to generate a control signal that causes the feed device to reduce the supply of the consumable material; and when the received sensed parameter is indicative of a tension below a second threshold value, the controller may be configured to generate a control signal that causes the feed device to increase the supply of the consumable material.

In one or more embodiments, the controller may be configured to control the supply of the consumable material such that the consumable material touches the weld location at a predefined frequency.

In one or more embodiments, the predefined frequency may be one or more of defined:
as a fixed value at system installation;
as a user defined value; and
as a value that is automatically selected based on received information indicative of properties of the workpiece that is to be welded.

According to a second aspect of the present disclosure, there is provided a welding control system configured to control the welder comprising the controller of the first aspect and the welding parameter sensor, wherein the welding parameter sensor is configured to sense a sensed parameter indicative of a characteristic of an interaction between the consumable material and one of: the workpiece; and the heat generation element and wherein the welding parameter sensor is configured to provide the sensed parameter to the controller.

According to a third aspect of the present disclosure, there is provided a welding system comprising the welding control system of second aspect, and a welder wherein the welder comprises a heat generation element configured to generate heat at a weld location on a workpiece suitable for forming a weld and a feed device configured to supply a consumable material to the weld location based on a received control signal.

According to a fourth aspect of the present disclosure, there is provided a method for controlling a welding system wherein the welding system comprises a welder and associated welding parameter sensor, wherein the welder comprises a heat generation element configured to generate heat at a weld location on a workpiece suitable for forming a weld and a feed device configured to supply a consumable material to the weld location based on a received control signal, wherein the method comprises:
generating heat at the weld location on the workpiece;
moving the consumable material towards the weld location using the feed device;
sensing a sensed parameter using the welding parameter sensor wherein the sensed parameter is indicative of a characteristic of an interaction between the consumable material and one of: the workpiece; and the heat generation element; and
generating the control signal configured to control the supply of the consumable material by the feed device based on the sensed parameter;
controlling the supply of the consumable material towards the weld location using the feed device based on the control signal.

According to a fifth aspect of the present disclosure, there is provided a computer program product comprising computer program code configured to cause a controller to carry out the method of the fourth aspect.

### Brief Description of the Drawings

One or more embodiments will now be described by way of example only with reference to the accompanying drawings in which:
Figure 1 shows an example welding system according to the present disclosure;
Figure 2 shows another example method for controlling a welding system according to the present disclosure; and
Figure 3 shows a computer readable medium comprising computer program code.

### Detailed Description

The use of a consumable material, such as a filler material, during welding can be critical to the quality and integrity of a weld. Despite the importance of the consumable material, provision of the consumable material is typically managed manually. The present disclosure provides a welding system, and various sub-components thereof, which provide for automated control of the supply of the consumable material based on a sensed parameter.

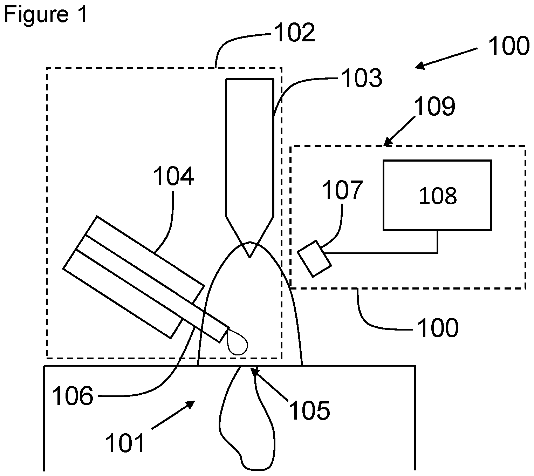

Figure 1 shows a welding system 100 according to the present disclosure which is configured to perform welding on a workpiece 101. The workpiece 101 may be any type of workpiece 101 which can be welded by one or more welding processes. The workpiece 101 may be repaired by the welding process or it may be that two separate objects may be joined at their interfaces (edges) by way of the weld to form the final workpiece 101.

The welding systems 100 disclosed herein may, in some embodiments, be configured to weld metals, such as steel, aluminium, copper or other metals and their alloys. For example, the welding systems 100 may be Tungsten Inert Gas (TIG) or Metal Inert Gas (MIG) welding systems, but may also be configured to implement other types of welding technique that use a consumable filler material. In other embodiments, the welding systems 100 may be configured to weld plastics, such as thermoplastics. For example, the welding system 100 may be a hot air welding system, an extrusion welding system or another type of plastic welding system.

The welding system 100 according to the present disclosure comprises a welder 102 comprising a heat generation element 103 and a feed device 104.

The heat generation element 103 is configured to generate heat at the weld location 105 suitable for forming a weld. The generated heat is sufficient to melt the workpiece 101, partially melt the workpiece 101, or otherwise render the workpiece 101 suitable for welding. The heat may be generated in any suitable way depending on the type of welding being implemented.

For example, an electric arc between an electrode (the heat generation element 103) and the workpiece 101 may be used to generate heat in welding techniques involving a conductive or partially conductive workpiece 101. The application of a high voltage between the electrode 103 and the workpiece 101 causes the air, or another shielding gas, therebetween to be ionised. An electric arc is then able to travel through the ionised gas between the electrode 103 and the workpiece, thereby providing the desired heating.

In the case of thermoplastic welding, a heat gun (the heat generation element 103) may be used to provide the heat at the weld location 105. Other techniques may also be used where appropriate.

The feed device 104 may be any suitable device which is configured to supply the consumable material 106 to the weld location 105. The feed device 104 may dispense or otherwise extend a consumable material 106 towards the weld location 105. In other embodiments, the feed device 104 may hold the consumable material 106 and may be movable such that the consumable material 106 is supplied to the weld location 105 as needed. The feed device 104 is a controllable feed device 104 configured to be controlled by way of a received control signal. Thus, for example, the dispensing or movement of the consumable material 106 may be controlled by way of implementation of instructions received in a control signal. The feed device 104 may be partially manual and partially automated such that a user can initiate, control or end the supply of the consumable material 106 while relying on the automated supply for fine control of the supply.

The consumable material 106 may be any suitable material, depending on the type of welding being implemented. For example, the consumable material may be a wire, a filler rod, flux, a thermoplastic welding rod or another type of consumable material.

The welding parameter sensor 107 is configured to sense a welding parameter indicative of a characteristic of an interaction between the consumable material 106 and one of: the workpiece 101; and the heat generation element 103. The welding parameter sensor 107 is further configured to send the sensed welding parameter to a controller 108 for the generation of a control signal. By sensing the welding parameters indicative of an interaction between the consumable material 106 and one or both of the workpiece 101 and the heat generation element 103, a control signal can be generated which can be used by the feed device 104 to ensure the correct amount of consumable material 106 is being supplied for the purpose of obtaining a high-quality weld. In particular, the welding parameter sensed by the welding parameter sensor 107 may be any suitable parameter which indicates when the consumable material 106 supplied by the feed device 104 is coming contact with the weld location 105. In one or more embodiments, it may be desirable that the consumable material 106 is deposited at the weld location 105 at a predetermined frequency. This may provide the highest-quality consistent weld. The sensed parameter, when detected over time, may be any parameter which is suitable for providing an indication of the frequency with which the consumable material is deposited at the weld location 105.

The controller 108 is configured to receive the sensed parameter from the welding parameter sensor 107 and, based on the received sensed parameter, generate a control signal which is configured to control the supply of the consumable material 106 by the feed device 104. For example, the control signal may be configured to cause the feed device 104 to increase, maintain or reduce the supply of consumable material 106 for the continued welding of the workpiece. Increasing the supply of consumable material 106 may include moving the consumable material closer to the weld location or dispensing additional consumable material 106. Maintaining the supply of consumable material 106 may include maintaining the position or dispense rate of the consumable material 106. In other embodiments, maintaining the supply of the consumable material 106 may include moving the consumable material 106 closer to the weld location 105 at a rate slower than required to increase the supply of the consumable material 106 to the weld site. Decreasing the supply of consumable material 106 may include moving the consumable material 106 away from the weld location 105 or stopping the dispensing of the consumable material 106.

The control signal generated by the controller 108 may be configured to cause the consumable material 106 to be provided at the weld location 105 at a predetermined frequency. The frequency may be, or example 2 - 100 Hz. The predetermined frequency may be a fixed value which is determined at system installation. For example, a particular TIG welder may have an optimum frequency or frequency range at which the consumable material 106 is provided to the weld location 105 and so this frequency or frequency range may be preset. In other embodiments, it may be desirable to set the frequency automatically based on properties of the workpiece to be welded. Thus, the frequency may be automatically selected based on received information indicative of the workpiece 101 to be welded. Additional details may assist in selecting the desired frequency, such as the consumable material 106 being used, the thickness of the workpiece 101 and other properties. In yet other embodiments, the frequency may be a user-defined frequency. The user defined frequency may be set by a user at the start of the weld and/or it may be adjusted by the user during the welding process in order to control the weld due to factors that the user can perceive. It will be appreciated that a combination of ways of determining the frequency may be used in a single system. For example, the frequency may initially be set as a predetermined frequency defined at installation of the system and the value may then be fine-tuned based on information received about the workpiece 101 and the frequency may be further overridden during welder by a user.

The controller 108 is further configured to output the control signal. The control signal may be output, when in use, to the welder 102 and, particularly, to the feed device 104 in order to provide for the necessary control thereof.

The controller 108 may be any suitable hardware or software implemented controller. A software controller 108 may configured to execute computer program code configured to cause a processor of the controller 108 to generate and output the control signal. It will be appreciated that the controller 108 may also be implemented in hardware. The controller 108 may be a component which is included locally alongside the welder 102 and parameter sensor 107 or it may be remote from the welder 102 and parameter sensor 107. Thus, the components which comprise the welding system 100 may all be local to a particular location or the controller 108 may be remote from the other components of the welding system 100. For example, the controller 108 may be implemented as part of a local processing or control device, on a remote server, at the edge, in the cloud or elsewhere.

In one or more embodiments, the welder 102 may be configured to provide for welding of metals. In such embodiments, the heat generation element 103 may be an electrode which is configured to generate an electric arc which generates heat at the weld location 105, as described previously. In such embodiments, the received sensed parameter may be indicative of the presence or absence of a short-circuit of the electric arc caused by the introduction of the consumable material 106 at the weld location 105. In particular, the electric arc, which is typically established between the electrode 103 and the workpiece 101, may instead arc to the consumable material 106, which is typically conductive in metallic welding, thereby causing a short-circuit. The welding parameter sensor 107 may be any suitable sensor, such as a voltmeter, ammeter or other sensor which can detect the short-circuit.

In embodiments in which a presence or absence of a short-circuit is used to generate the control signal, the control signal may be configured to cause to the feed device 104 to one of slow or reverse the supply of the consumable material 106 to the weld location 105 based on the received sensed parameter being indicative that short-circuit has been detected. The control signal may be configured to cause the feed device 104 to one or increase or maintain the supply of the consumable material 106 to the weld location based on the received sensed parameter being indicative that a short-circuit has not been detected.

When a frequency is set by the controller 108 for the rate at which the consumable material 106 touches the weld location 105, the controller 108 may be configured to use the detected presence or absence of a short-circuit to ensure that the frequency is maintained at its desired value.

In some embodiments, the welding parameter sensor 107 may be configured to detect a sound at the weld location 105 and transmit a signal to the controller 108 indicative of the sound at the weld location 105. The controller 108 may be configured to generate the control signal based on the detected sound at the weld location 105. This may be beneficial, as the application of the consumable material 106 to the weld location by way of the contact of a filler rod at the weld location 105 or otherwise may result in a detectable sound which can be used to control the supply of the consumable material 106. The controller 108 may use a machine-learning algorithm which has been trained to detect the sound of the consumable material touching the weld location in order to identify when the consumable material 106 is or is not touching the weld location 105. The machine-learning algorithm may be trained in a plurality of different environments such that the sound can be picked out regardless of the environment in which the welding is being completed

When the received sensed parameter is indicative that the consumable material 106 is touching (or has recently touched) the weld location 105, the controller 108 may be configured to generate a control signal that causes the feed device 104 to reduce the supply of the consumable material 106. Similarly, when the received sensed parameter is indicative that the consumable material 106 is not touching (or has not recently touched) the weld location 105, the controller 108 may be configured to generate a control signal that causes the feed device 104 to increase the supply of the consumable material 106 to the weld location 105.

When a frequency is set by the controller 108 for the rate at which the consumable material 106 touches the weld location 105, the controller 108 may be configured to use the detected sound at the weld location 105 to ensure that the frequency is maintained at its desired value.

In yet other embodiments, the welder 102 may be a thermoplastic welder 102 configured to heat a weld location of a thermoplastic workpiece using a hot air source 103. In such embodiments, the received sensed parameter may be indicative of a tension of the consumable material 106, wherein tension on the consumable material 106 is increased by the introduction of the consumable material 106 at the weld location 105. The control signal may, thus, be based on the sensed tension. It will be appreciated that, while tension is described herein, it would be equivalent to measure a compression of the consumable material 106. For example, when the received sensed parameter is indicative of a tension above a first threshold, the controller 108 may be configured to generate a control signal that causes the feed device 104 to reduce the supply of the consumable material 106. This may be because the consumable material 106 is being consumed too quickly or because the touching of the consumable material 106 to the workpiece may cause additional tension on the consumable material 106. Similarly, when the received sensed parameter is indicative of a tension below a second threshold value, the controller 108 may be configured to generate a control signal that causes the feed device 104 to increase the supply of the consumable material 106. The first threshold value and the second threshold value may be the same value. In such embodiments, the feed device 104 may continuously switch between increasing and decreasing the rate of supply of the consumable material 106 based on the detected tension. In other embodiments, the first predetermined value may be greater than the second predetermined value. The tension values between the first and second predetermined values may be tensions at which the supply of the consumable material 106 is held constant. The first and second tensions, whether the same or different, may be obtained by way of a calibration step performed before the controller is used to control the feed device. The calibration step may be configured to determine a desired or otherwise acceptable tensions.

One may define a welding control system 109 which comprises the controller 108 and the welding parameter sensor 107. It will be appreciated that, in one or more embodiments, a controller 108 and welding parameter sensor 107 may be provided as an upgrade pack (as the welding control system 109) for a welder 102 that comprises a programmable feed device 104.

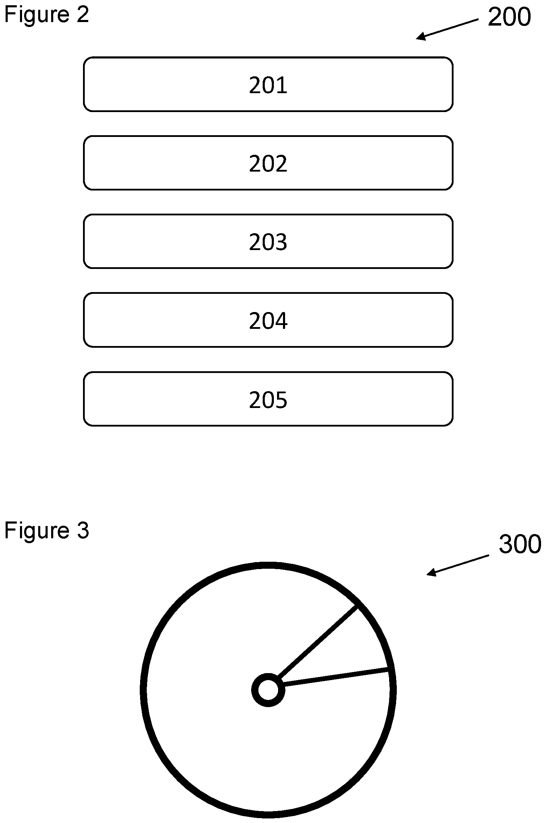

Figure 2 shows a method 200 or controlling a welding system of the present disclosure. The method 200 comprises generating 201 heat at the weld location on the workpiece; moving 202 the consumable material towards the weld location using the feed device; sensing 203 a sensed parameter using the welding parameter sensor wherein the sensed parameter is indicative of a characteristic of an interaction between the consumable material and one of: the workpiece; and the heat generation element; and generating 204 the control signal configured to control the supply of the consumable material by the feed device based on the sensed parameter; and controlling 205 the supply of the consumable material towards the weld location using the feed device based on the control signal.

Figure 3 shows an example computer program product 300 comprising computer program code configured to cause a controller to carry out the method described with reference to figure 2.

It will be appreciated that the features and embodiments disclosed herein above may be combined together in any manner except for where to do so would be explicitly against the teachings of the present disclosure. By way of non-limiting example, the implementation of multiple different welding parameter sensors may be used in a single embodiment and the controller may base its generated control signal on a plurality of different sensed welding parameters. The skilled person will appreciate, for example, that the sound-based sensors may be implemented with either of the other techniques, as sound-based detection is not limited to thermoplastic welding or metallic welding techniques. Every possible combination or permutation of features has not been described for brevity and so as to avoid obfuscating the benefits of each of the features disclosed here. Further, while some features are listed in seemingly separate embodiments, this does not imply that some features may not be advantageously synergistically combined in order to provide for a contribution which is greater than the sum of its parts.

## Claims

1. A controller for a welding system, wherein the welding system comprises a welder and associated welding parameter sensor, wherein the welder comprises a heat generation element configured to generate heat at a weld location on a workpiece suitable for forming a weld and a feed device configured to supply a consumable material to the weld location based on a received control signal, wherein the controller is configured to:
receive a sensed parameter from the welding parameter sensor indicative of a characteristic of an interaction between the consumable material and one of: the workpiece; and the heat generation element; and
generate and output the control signal configured to control the supply of the consumable material by the feed device based on the sensed parameter.

2. The controller of claim 1 wherein:
the heat generation element of the welder is an electrode configured to generate an electric arc which generates the heat at the weld location;
the received sensed parameter is indicative of the presence or absence of a short-circuit of the electric arc caused by the introduction of the consumable material at the weld location; and
wherein the control signal is based on the presence or absence of the sensed short-circuit.

3. The controller of claim 2 wherein the control signal is configured to cause the feed device to one of slow and reverse the supply of the consumable material to the weld location based on the received sensed parameter being indicative that a short-circuit has been detected.

4. The controller of claim 2 or claim 3 wherein the control signal is configured to cause the feed device to one of increase and maintain the supply of the consumable material to the weld location based on the received sensed parameter being indicative that a short-circuit has not been detected.

5. The controller of claim 1 wherein the received sensed parameter is indicative of a sound at the weld location and wherein the controller is configured to generate the control signal based on the detected sound at the weld location.

6. The controller of claim 5 wherein the controller is configured to detect a sound of the consumable material touching the weld location in the received sensed parameter and wherein:
when the received sensed parameter is indicative that the consumable material is touching the weld location, the controller is configured to generate a control signal that causes the feed device to reduce the supply of the consumable material; and
when the received sensed parameter is indicative that the consumable material is not touching the weld location, the controller is configured to generate a control signal that causes the feed device to increase the supply of the consumable material.

7. The controller of claim 1 wherein the heat generation element of the welder is a hot air source configured to generate the heat at the weld location and wherein the workpiece comprises a thermoplastic, wherein:
the received sensed parameter is indicative of a tension on the consumable material, wherein tension on the consumable material is increased by the introduction of the consumable material at the weld location; and
the control signal is based on the sensed tension.

8. The controller of claim 7 wherein:
when the received sensed parameter is indicative of a tension above a first threshold value, the controller is configured to generate a control signal that causes the feed device to reduce the supply of the consumable material; and
when the received sensed parameter is indicative of a tension below a second threshold value, the controller is configured to generate a control signal that causes the feed device to increase the supply of the consumable material.

9. The controller of claim 3, 4, 6 or 8 wherein the controller is configured to control the supply of the consumable material such that the consumable material touches the weld location at a predefined frequency.

10. The controller of claim 9 wherein the predefined frequency is one or more of defined:
as a fixed value at system installation;
as a user defined value; and
as a value that is automatically selected based on received information indicative of properties of the workpiece that is to be welded.

11. A welding control system configured to control the welder comprising the controller of any preceding claim and the welding parameter sensor, wherein the welding parameter sensor is configured to sense a sensed parameter indicative of a characteristic of an interaction between the consumable material and one of: the workpiece; and the heat generation element and wherein the welding parameter sensor is configured to provide the sensed parameter to the controller.

12. A welding system comprising the welding control system of claim 11, and a welder wherein the welder comprises a heat generation element configured to generate heat at a weld location on a workpiece suitable for forming a weld and a feed device configured to supply a consumable material to the weld location based on a received control signal.

13. A method for controlling a welding system wherein the welding system comprises a welder and associated welding parameter sensor, wherein the welder comprises a heat generation element configured to generate heat at a weld location on a workpiece suitable for forming a weld and a feed device configured to supply a consumable material to the weld location based on a received control signal, wherein the method comprises:
generating heat at the weld location on the workpiece;
moving the consumable material towards the weld location using the feed device;
sensing a sensed parameter using the welding parameter sensor wherein the sensed parameter is indicative of a characteristic of an interaction between the consumable material and one of: the workpiece; and the heat generation element; and
generating the control signal configured to control the supply of the consumable material by the feed device based on the sensed parameter;
controlling the supply of the consumable material towards the weld location using the feed device based on the control signal.

14. A computer program product comprising computer program code configured to cause a controller to carry out the method of claim 13.
